# NEUE EUROPÄISCHE PATENTSCHRIFT

(11) **EP 1 559 980 B2**
(45) Veröffentlichungstag und Bekanntmachung des Hinweises auf die Entscheidung über den Einspruch: **18.05.2022**
(45) Hinweis auf die Patenterteilung: 23.05.2012
(21) Anmeldenummer: 05000457.1
(22) Anmeldetag: 12.01.2005
(51) Int. Cl.: F28D 9/00, F28F 27/02

(54) **Plattenwärmeübertrager**
Plate heat exchanger
Echangeur de chaleur à plaques

(30) Priorität: 31.01.2004 DE 102004004975
(43) Veröffentlichungstag der Anmeldung: 03.08.2005
(73) Patentinhaber: Modine Manufacturing Company, Racine, Wisconsin 53403-2552 (US)
(72) Erfinder: Kalbacher, Klaus, Dipl.-Ing., 72414 Rangendingen (DE); Bräuning, Thomas, Dipl.-Ing., 70186 Stuttgart (DE)
(74) Vertreter: Ter Meer Steinmeister & Partner

(56) Entgegenhaltungen:
- EP-A- 0 819 907
- EP-A2- 0 787 929
- DE-A1- 4 125 079
- DE-A1- 10 019 029
- DE-A1- 10 019 029
- DE-A1- 19 519 740
- DE-A1- 19 654 365
- FR-A- 2 790 073
- US-A- 5 042 577

## Beschreibung

Die Erfindung betrifft einen Plattenwärmeübertrager, beispielsweise einen Getriebeölkühler, in dem das Getriebeöl mit einer Flüssigkeit im Wärmeaustausch ist, wobei der Plattenwärmeübertrager aus ineinander gestapelten Wärmeübertragerplatten besteht, die jeweils Öffnungen aufweisen, die im Stapel der Wärmeübertragerplatten Kanäle bilden, die der Zu - bzw. der Abführung der Medien dienen, sowie mit einer oberen Platte und ,einer unteren Platte, und mit einem Überführungskanal, der in der oberen oder der unteren Platte ausgebildet ist, um ein Medium zu einer gewünschten Position der Zu - oder der Abführung zu leiten und mit weiteren Merkmalen aus dem Oberbegriff des Anspruchs 1.

Dieser Plattenwärmeübertrager gehört zum Stand der Technik, beispielsweise gemäß dem EP 819 902A2. Dort wird im Übrigen ein Plattenwärmtauscher gezeigt und beschrieben, der für drei oder mehr als drei Medien geeignet ist. Der Überführ- und auch der Überleitungskanal wurden dort in einzelnen, den Kanälen zugeordneten Platten ausgebildet. Die Überführkanäle bzw. die Überleitungskanäle ermöglichen durch ihre Formgebung bzw. Ausgestaltung, gewünschte Anschlusspositionen zu realisieren. Eine Reihe von Merkmalen des Oberbegriffs ergeben sich prinzipiell auch aus der WO 94/29659 und aus einer Reihe anderer Dokumente. Genannt sei lediglich noch die EP 614 061 A1.

Es gehört außerdem zum Stand der Technik, Thermostat-Regelventile in Verbindung mit solchen Plattenwärmetauschern einzusetzen. Die Thermostat-Regelventile lassen es bei einem Ölkühler zu, das Öl auf eine möglichst optimale Temperatur einzustellen bzw. zu halten. Eine diesbezügliche Lösung geht aus der DE 100 19 029A1 hervor. Dort wurde einer der erwähnten Überführkanäle (dort Position 18 in Fig. 1 bzw. 2) jedoch nicht in einer Platte ausgebildet, sondern in einem an dem Wärmetauscher anbringbaren Bauteil. Hinsichtlich variabler Anschlusspositionen scheinen Verbesserungen erforderlich zu sein.

Aus der DE 196 54 365A1 ist ebenfalls ein Plattenwärmetauscher bekannt, der den Merkmalen des Oberbegriffes ähnlich ist. Eine Möglichkeit der Temperierung wurde dort jedoch nicht angesprochen.

Eine andere Lösung ist aus dem EP 1 500 896 A2 bekannt. Dort wurde ein Regler vorgesehen, der sich neben dem Plattenwärmetauscher befindet, um die Durchströmung der Strömungskanäle zu regeln. Diese Bauweise ist für Anwendungen des Plattenwärmtauschers im Automobilbereich nicht einsetzbar, weil zu viel Bauraum gebraucht wird.

Die Aufgabe der Erfindung besteht darin, die variablen Anschlussmöglichkeiten der Plattenwärmeübertrager aus dem Stand der Technik mindestens zu erhalten oder zu verbessern und gleichzeitig eine Möglichkeit zur Temperierung bereitzustellen. Die erfindungsgemäße Lösung ergibt sich bei dem Plattenwärmeübertrager mit den Merkmalen des Oberbegriffs aus dem Kennzeichen des Anspruchs 1.

Weil der Überführungskanal in einer oberen Platte für das eine Medium gedacht ist und in einer unteren Platte ein Überleitungskanal vorgesehen ist, der zur Überleitung des anderen Mediums dient, besitzt der Plattenwärmeübertrager vergleichsweise verbesserte Anschlussmöglichkeiten. Die Positionen der Anschlüsse sind nach der Erfindung für beide Medien frei wählbar, weil entsprechende Überführungs - bzw. Überleitungskanäle an einer unteren Platte und an einer oberen Platte ausgebildet sind. Der Überleitungskanal in einer unteren Platte ist für die Flüssigkeit (Kühlmittel) gedacht und der Überführungskanal in einer oberen Platte ist für das Öl vorgesehen. Darüber hinaus wird durch die Erfindung, insbesondere bei Plattenwärmeübertragern von überdurchschnittlicher Länge und einer relativ geringen Anzahl von Strömungskanälen, eine deutliche Senkung des Druckverlustes auf einer Flüssigkeitsseite erreicht.

Auf der oberen Platte ist ein Thermostat - Regelventil angeordnet, dessen Thermostat mit dem Öl im Überführungskanal in Kontakt kommt. Mit diesem wesentlichen Merkmal kann die Temperierung, beispielsweise des Getriebeöls, vorgenommen werden.

An der oberen Platte ist ein zweiter Überleitungskanal für die Flüssigkeit (Kühlmittel) ausgebildet. Mit dieser Maßnahme wird die Lösung der Aufgabenstellung noch weiter vorangetrieben.

Die im Plattenwärmeübertrager vorhandenen Strömungskanäle für das eine Medium ( Öl) sind in einer Richtung über etwa die Gesamtlänge des Plattenwärmeübertragers durchströmbar. Die davon getrennten Strömungskanäle für das andere Medium (Kühlflüssigkeit) sind gegensinnig durchströmbar, wobei das andere Medium in seinem Eintrittskanal in zwei Teilströme aufgeteilt ist, wobei der eine Teilstrom am Eintrittskanal in seine Strömungskanäle eintritt und der andere Teilstrom über den Überleitungskanal zum gegenüberliegenden Ende des Plattenwärmeübertragers strömt, um dort in die ihm zugeordneten Strömungskanäle einzutreten, so dass beide Teilströme des anderen Mediums im Plattenwärmeübertrager konkurrierende Strömungsrichtung besitzen. Bei Umkehr der Durchströmung haben die Teilströme natürlich eine divergierende Strömungsrichtung.

Die konkurrierenden Teilströme treffen sich etwa in der Mitte des Plattenwärmeübertragers, wobei sie in einem Austrittskanal münden.

Der Plattenwärmeübertrager besitzt demzufolge zwei Eintrittskanäle und einen Austrittskanal für die Flüssigkeit. In den einen Eintrittskanal tritt der gesamte Kühlmittelstrom ein und teilt sich dort in zwei Teilströme auf. In den anderen Eintrittskanal tritt der über den Überleitungskanal ankommende Teilstrom ein, der sich dort auf seine Strömungskanäle aufteilt.

Der erwähnte Austrittskanal mündet in dem zweiten Überleitungskanal, der beispielsweise in der oberen Platte ausgebildet ist und zu einem Auslassstutzen führt. Es ist auch vorgesehen, dass der Überführungskanal in einer oberen oder unteren Platte für das eine Medium gedacht ist, und dass in derselben Platte ein Überleitungskanal ausgebildet ist, der zur Überleitung des anderen Mediums dient. Auch bei dieser Lösung kann ein zweiter Überleitungskanal ebenfalls in derselben Platte ausgebildet sein. Durch diese Lösung wird die konstruktive Freiheit bezüglich der gewünschten Positionen der Zu - und Abflüsse weiter verbessert. Sie hat darüber hinaus den Vorteil, dass eine der Platten unverformt verwendet werden kann oder gegebenenfalls kann auf eine dieser Platten herkömmlicher Art vollständig verzichtet werden.

Die Erfindung wird anhand der Figuren in Ausführungsbeispielen beschrieben. Die Beschreibung enthält weitere Einzelheiten, die sich möglicherweise als besonders bedeutsam herausstellen können.

Die Figuren zeigen Folgendes:
Fig. 1 Draufsicht auf einen Plattenwärmeübertrager;
Fig. 2 eine Ansicht von unten auf den Plattenwärmeübertrager der Fig. 1;
Die Fig. 3 und 4 zeigen ähnliche Schnitte durch den Plattenwärmeübertrager, die durch die Kanäle auf der Flüssigkeitsseite verlaufen.
Die Fig. 5 zeigt eine Draufsicht auf einen Plattenwärmeübertrager gemäß dem alternativen Lösungsvorschlag.
Die Fig. 6 zeigt eine Alternative zur Fig. 2

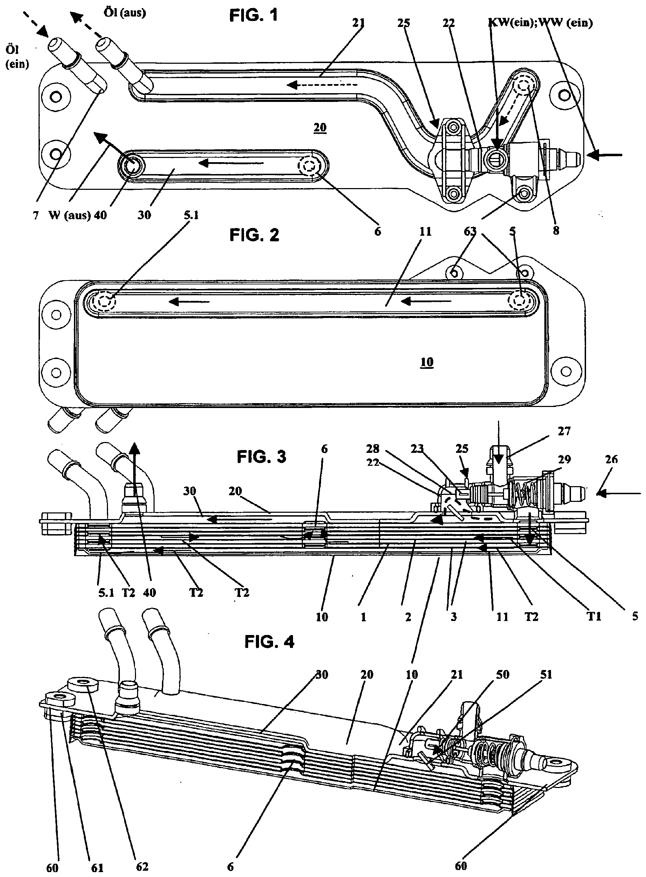

Der abgebildete Plattenwärmeübertrager ist ein Getriebeölkühler, der beispielsweise in einem Kraftfahrzeug eingesetzt werden kann, um das Getriebeöl mittels der Kühlflüssigkeit des Fahrzeugmotors zu temperieren. Zur Temperierung dient ein Thermostat - Regelventil **25** in einem Gehäuse **22**, das auf der einen Platte, im Ausführungsbeispiel auf der Deckplatte **20**, des Plattenwärmeübertragers angeordnet und mit Befestigungsmitteln **63** mit der Deckplatte **20** verbunden ist. Wie aus den Fig. 3 und 4 hervorgeht, besitzt das Gehäuse **22** eine Kammer **28** und eine Abteilung **29.** Die Kammer **28** ist von der Abteilung **29** hydraulisch getrennt. In die Kammer **28** ragt der Thermostat **23** hinein, während sich in der Abteilung **29** an sich bekannte Elemente des Regelventils, wie Ventilstange, Ventilteller usw. erstrecken. Die hydraulische Trennung kann mittels Dichtungen am Thermostat **23** vorgenommen werden. Am die Abteilung **29** bildenden Gehäuse 22 ist ein Anschluss **27** für gekühlte Kühlflüssigkeit **KW** und ein anderer Anschluss **26** für vorgewärmte Kühlflüssigkeit **WW** angeordnet. Je nach vorliegender Temperatur des Öls wird der Thermostat 23 die Ventilstange mit dem Ventilteller so bewegen, dass entweder nur gekühlte Kühlflüssigkeit **KW,** nur angewärmte Kühlflüssigkeit **WW** oder eine Mischung aus **KW** und **WW** aus der Abteilung **29** in den Eintrittskanal **5** für die Kühlflüssigkeit des Plattenwärmeübertragers einströmen wird, um somit das Getriebeöl möglichst im Bereich des Temperaturoptimums zu halten bzw. zu bringen. In der Deckplatte **20** ist ein Überführungskanal **21** ausgebildet, durch den das Öl von seinem Austrittskanal **8** zu seiner vorgesehenen Austrittsstelle **Öl (aus)** strömt. Der Eintrittskanal **7** für das Öl wurde lediglich am Stutzen **Öl (ein)** angedeutet. Das Öl durchströmt die Strömungskanäle **1** im Plattenwärmeübertrager vom Eintrittskanal **7** zum Austrittskanal **8.** In dem erwähnten Überführungskanal **21** für das Öl befindet sich ein Ausschnitt **50** mit einem Strömungslenkelement **51**, um das Öl in die Kammer **28** und an den Thermostaten **23** zu leiten, was in der Fig. 3 durch einen gestrichelten Pfeil angezeigt ist. Im Übrigen zeigen die anderen gestrichelten Pfeile die Strömung des Öls und die durchgezogenen Pfeile die Strömung der Kühlflüssigkeit an, auf die im Folgenden noch näher eingegangen werden soll. Wie bereits beschrieben, strömt die Kühlflüssigkeit in den Eintrittskanal **5** ein. Sie verteilt sich dort in einen Teilstrom **T1**, der dort in die Strömungskanäle **2** für die Kühlflüssigkeit eintritt. In der Fig. 3 wurde lediglich ein einziger Pfeil **T1** eingezeichnet. Der andere Teilstrom **T2** strömt durch den in der anderen Platte, im Ausführungsbeispiel in der Grundplatte **10**, ausgebildeten Überleitungskanal **11** zum diametralen Ende des Plattenwärmeübertragers. Dort ist ein zweiter Eintrittskanal **5.1** ausgebildet, über den der Teilstrom **T2** Zugang zu den Strömungskanälen **2** hat, um in konkurrierender Strömungsrichtung mit dem Teilstrom **T1** zum Austrittskanal **6** zu gelangen. Der Austrittskanal **6** ist etwa in der Mitte des Plattenwärmeübertragers angeordnet. Vom Austrittskanal **6** strömt die Kühlflüssigkeit in einen auf der Deckplatte **20** angeordneten zweiten Überleitungskanal **30,** der zum Austrittsstutzen **40** für Kühlflüssigkeit **W(aus)** führt. Der Austrittsstutzen **40** und der Austrittskanal **6** besitzen einen Abstand voneinander. Es versteht sich, dass bei einer möglichen Umkehr der Durchströmung die Teilströme **T1** und **T2** divergierende Strömungsrichtung besitzen.

Es ist durch die Erfindung möglich geworden, die Ein - und Austritte für beide Medien zu frei wählbaren Stellen im Bereich der Grund - bzw. der Deckplatte **20** zu leiten. Dies erfolgt durch entsprechende Ausbildung der Überführungs - und der Überleitungskanäle **11, 21, 30,** die jede beliebige Form aufweisen können. Daraus ist ersichtlich, dass durch die Erfindung die Anschlussmöglichkeiten des Plattenwärmeübertragers in sehr beengten Einbauräumen wesentlich verbessert wurden.

Die Aufteilung des Kühlflüssigkeitsstroms in die Teilströme **T1** und **T2** kann durch bekannte konstruktive Maßnahmen, wie beispielsweise die Dimensionierung der Strömungskanäle **2** und der Überleitungskanäle **11** und **30** oder auch durch entsprechende Wahl der Kanallängen in die gewünschte Richtung beeinflusst werden. Mit besonderem Vorteil ist die Erfindung bei Plattenwärmeübertragern einsetzbar, die eine relativ geringe Anzahl von Strömungskanälen 1, 2 bei ziemlich großer Länge derselben aufweisen, um den Druckverlust zu reduzieren.

Wie die beiliegenden Figuren ferner zeigen, besitzt die Deckplatte **20** des Plattenwärmeübertragers einen Überstand **60**, der über den aus Wärmeübertragerplatten **3** gebildeten Stapel hinausragt. Dieser Überstand **60** wird genutzt, um insbesondere eine schwingungsdämpfende Befestigung **61, 62** des Plattenwärmeübertragers vornehmen zu können.

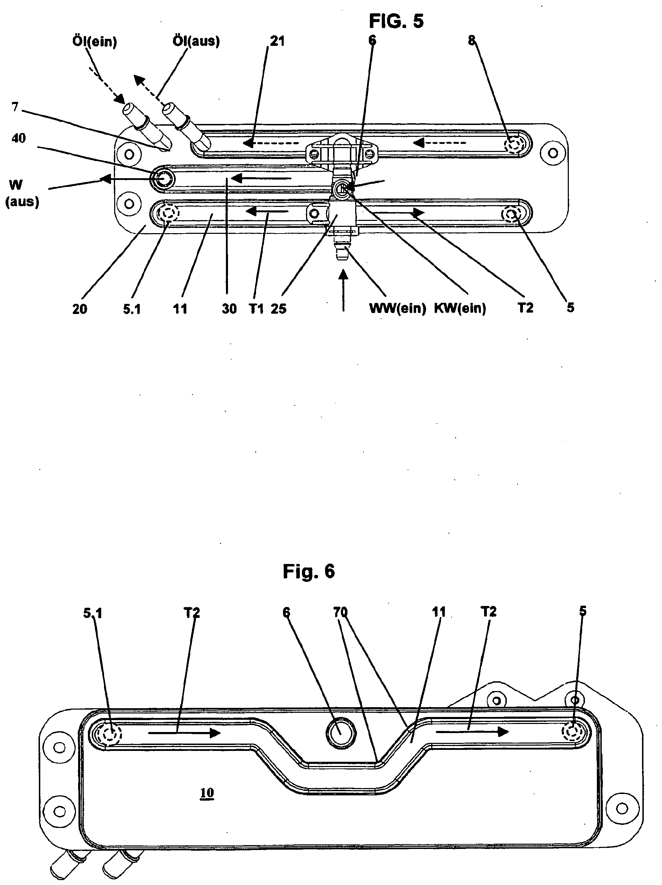

Im alternativen Lösungsvorschlag, der in der Fig. 5 gezeigt ist, wurden lediglich aus ökonomischen Gründen relativ wenig Änderungen gegenüber dem ersten Lösungsvorschlag vorgenommen. Es wurden für gleiche Teile die gleichen Bezugszeichen verwendet. Die Positionen für **Öl(ein)** und **Öl (aus)** wurden nicht verändert. Die Überleitungskanäle **30, 11** und der Überführungskanal **21** wurden lediglich als gerade Kanäle ausgebildet, obwohl jeder beliebige andere, insbesondere auch kurvenförmige Verlauf vorgenommen werden könnte. Sie befinden sich an der einen Platte, im Ausführungsbeispiel an der Deckplatte **20.** Auch in diesem Lösungsvorschlag wurde ein Thermostat-Regelventil **25** eingesetzt. Es befindet sich ebenfalls auf der Deckplatte **20,** könnte aber auch an anderen Stellen angeordnet sein. Im Übrigen ist erkennbar, dass es sich um körperlich das gleiche Regelventil **25** handelt, wie im ersten Vorschlag. Es könnte entsprechend angepasst werden. Die Ein - bzw. Austrittskanäle **5, 5.1, 7** und **8** wurden angedeutet. Der Austrittskanal **6** für die Kühlflüssigkeit wird vom Thermostat-Regelventil **25** verdeckt. Insgesamt ist aus der Darstellung mit den gestrichelten Strömungspfeilen für das Öl und den durchgezogen Strömungspfeilen für die Kühlflüssigkeit erkennbar, dass dieser Alternatiworschlag die erwähnten zusätzlichen Vorteile bietet. Hinsichtlich der Durchströmung des Plattenwärmeübertragers auf der Kühlflüssigkeitsseite unterscheidet sich der Alternatiworschlag von dem ersten Vorschlag dadurch, dass der gesamte Kühlflüssigkeitsstrom zunächst in den Überleitungskanal **11** eintritt und sich auf die beiden diametralen Enden des Plattenwärmeübertragers verteilt, um dort in die Eintrittskanäle **5, 5.1** einzutreten. Im ersten Lösungsvorschlag bilden sich demgegenüber, wie vorstehend beschrieben, die Teilströme **T1** und **T2** im Eintrittskanal **5** aus.

In der Fig. 6 ist ein Überleitungskanal **11** zu erkennen, der Abbiegungen **70** aufweist, die allerdings auch in der Fig. 1, am Überführungskanal **21,** zu sehen sind. Der Einfachheit halber wurden die Positionen der Kanäle **5, 5.1** nicht verändert, was jedoch durch die Möglichkeit, beliebig geformte Überführungs - bzw. Überleitungskanäle vorzusehen, leicht realisierbar wäre.

## Patentansprüche

1. Plattenwärmeübertrager, beispielsweise ein Getriebeölkühler, in dem das Getriebeöl mit einer Flüssigkeit im Wärmeaustausch ist, wobei der Plattenwärmeübertrager aus ineinander gestapelten und getrennte Strömungskanäle (1, 2) bildenden Wärmeübertragerplatten (3) besteht, die jeweils Öffnungen (4) aufweisen, die im Stapel der Wärmeübertragerplatten (3) Kanäle (5, 6, 7, 8) bilden, die der Zu - bzw. der Abführung der Medien dienen, sowie mit wenigstens einer oberen Platte (20) und wenigstens einer unteren Platte (10), und mit einem Überführungskanal (21), der an der oberen Platte (20) oder an der unteren Platte (10) ausgebildet ist, um ein Medium zu einer gewünschten Position der Zu - oder der Abführung zu leiten,
wobei der Überführungskanal (21) an der einen Platte (10 oder 20) für das eine Medium vorgesehen ist, und wobei an der einen oder an der anderen Platte (10 oder 20) ein Überleitungskanal (11) ausgebildet ist, der zur Überleitung des anderen Mediums dient, **dadurch gekennzeichnet, dass** am Überführungskanal (21) der einen Platte (10 oder 20) ein Thermostat - Regelventil (25) in einem Gehäuse (22) angeordnet ist, dessen Thermostat (23) mit dem einen Medium, nämlich Öl, über einen Ausschnitt (50) im Überführungskanal (21) in Kontakt kommt, wobei im Ausschnitt (50) ein Strömungslenkelement (51) angeordnet ist, um das Öl in eine Kammer (28) zu leiten, wobei das Gehäuse (22) des Thermostat-Regelventils (25) einen Anschluss (26) für kühlere Flüssigkeit und einen anderen Anschluss (27) für wärmere Flüssigkeit aufweist, und dass je nach Temperatur des Öls eine Flüssigkeitstemperatur einstellbar ist, die dazu beiträgt, dass das Öl im Bereich seines Temperaturoptimums temperierbar ist, wobei das Gehäuse (22) des Thermostat - Regelventils (25) die Kammer (28) für das Öl aufweist, in der das Öl mit dem Thermostat (23) in Kontakt ist und eine Abteilung (29) für die Flüssigkeit, die mit einem Zuführkanal des Plattenwärmeübertragers hydraulisch verbunden ist und in der die Anschlüsse (26, 27) für die unterschiedliche Temperatur aufweisenden Flüssigkeitsströme münden.

2. Plattenwärmeübertrager nach Anspruch 1, **dadurch gekennzeichnet, dass** der Überleitungskanal (11) an der anderen Platte (10 oder 20) für die Flüssigkeit gedacht ist und der Überführungskanal (21) in der einen Platte (10 oder 20) für das Öl vorgesehen ist.

3. Plattenwärmeübertrager nach Anspruch 1, **dadurch gekennzeichnet, dass** an der einen Platte (10 oder 20) ein zweiter Überleitungskanal (30), für die Flüssigkeit ausgebildet ist.

4. Plattenwärmeübertrager nach Anspruch 1, **dadurch gekennzeichnet, dass** die im Plattenwärmeübertrager vorhandenen Strömungskanäle (1) für das eine Medium, nämlich Öl, in einer Richtung über etwa die Gesamtlänge des Plattenwärmeübertragers durchströmbar sind, während die davon getrennten Strömungskanäle (2) für das andere Medium, nämlich Kühlflüssigkeit, gegensinnig durchströmbar sind, wobei das andere Medium in seinem Eintrittskanal (5) in zwei Teilströme (T1, T2) aufgeteilt ist, wobei der eine Teilstrom (T1) am Eintrittskanal (5) in seine Strömungskanäle (2) eintritt und der andere Teilstrom (T2) über den Überleitungskanal (11) zum gegenüberliegenden Ende des Plattenwärmeübertragers strömt, um dort in die ihm zugeordneten Strömungskanäle (2) einzutreten, so dass beide Teilströme (T1, T2) des anderen Mediums im Plattenwärmeübertrager konkurrierende Strömungsrichtung besitzen, wobei bei Umkehr der Durchströmung die Teilströme (T1, T2) divergierende Strömungsrichtung besitzen.

5. Plattenwärmeübertrager nach Anspruch 1 und 4, **dadurch gekennzeichnet, dass** die konkurrierenden oder divergierenden Teilströme (T1, T2) sich etwa in der Mitte des Plattenwärmeübertragers treffen oder in divergierender Richtung strömen, wozu sie einen gemeinsamen Austritts - bzw. Eintrittskanal (6) besitzen.

6. Plattenwärmeübertrager nach Anspruch 3, **dadurch gekennzeichnet, dass** der Austrittskanal (6) in den zweiten Uberleitungskanal (30) mündet, der zu einem im Abstand vom Austrittskanal (6) angeordneten Auslassstutzen (40) führt.

## Claims

1. Plate heat exchanger, for example a transmission oil cooler, in which the transmission oil is in heat exchange with a liquid, wherein the plate heat exchanger consists of heat exchanger plates (3) which are stacked one inside another, form separate flow passages (1, 2) and each have openings (4) which, in the stack of the heat exchanger plates (3), form passages (5, 6, 7, 8) which serve for the supply and removal of the media, and with at least one top plate (20) and at least one bottom plate (10), and with a delivery passage (21) which is formed on the top plate (20) or on the bottom plate (10) in order to conduct a medium to a desired supply or removal position,
wherein the delivery passage (21) on the one plate (10 or 20) is provided for the one medium, and wherein a transfer passage (11) is formed on the one plate or on the other plate (10 or 20), the transfer passage serving for the transfer of the other medium, **characterized in that** a thermostat control valve (25) is arranged in a housing (22) on the delivery passage (21) of the one plate (10 or 20), the thermostat (23) of which valve comes into contact with the one medium, namely oil, via a cutout (50) in the delivery passage (21), wherein a flow-deflecting element (51) is arranged in the cutout (50) in order to conduct the oil into a chamber (28), wherein the housing (22) of the thermostat control valve (25) has a connection (26) for cooler liquid and another connection (27) for warmer liquid, and **in that** a liquid temperature can be set depending on the temperature of the oil, the liquid temperature contributing to being able to control the temperature of the oil within the range of the optimum temperature thereof, wherein the housing (22) of the thermostat control valve (25) has the chamber (28) for the oil, in which chamber the oil is in contact with the thermostat (23), and a compartment (29) for the liquid, which compartment is hydraulically connected to a supply passage of the plate heat exchanger and in which the connections (26, 27) for the liquid streams, which have different temperatures, open out.

2. Plate heat exchanger according to Claim 1, **characterized in that** the transfer passage (11) on the other plate (10 or 20) is intended for the liquid, and the delivery passage (21) in the one plate (10 or 20) is provided for the oil.

3. Plate heat exchanger according to Claim 1, **characterized in that** a second transfer passage (30), for the liquid, is formed on the one plate (10 or 20).

4. Plate heat exchanger according to Claim 1, **characterized in that** the one medium, namely oil, can flow through the flow passages (1), which are present in the plate heat exchanger, in one direction over approximately the entire length of the plate heat exchanger while the other medium, namely cooling liquid, can flow through the flow passages (2) which are separated from the flow passages (1), in the opposite direction, the other medium being divided in the entry passage (5) thereof into two partial streams (T1, T2), the one partial stream (T1) entering the flow passages (2) thereof at the entry passage (5) and the other partial stream (T2) flowing via the transfer passage (11) to the opposite end of the plate heat exchanger in order for there to enter the flow passages (2) assigned thereto, so that the two partial streams (T1, T2) of the other medium in the plate heat exchanger have a competing direction of flow, and, upon reversal of the flow through, the partial streams (T1, T2) have a diverging direction of flow.

5. Plate heat exchanger according to Claims 1 and 4, **characterized in that** the competing or divergent partial streams (T1, T2) meet approximately in the centre of the plate heat exchanger or flow in a diverging direction, for which purpose the partial streams have a common exit passage or entry passage (6).

6. Plate heat exchanger according to Claim 3, **characterized in that** the exit passage (6) opens out into the second transfer passage (30) which leads to an outlet stub (40) arranged at a distance from the exit passage (6).

## Revendications

1. Echangeur de chaleur à plaques, par exemple refroidisseur d'huile de boîte de vitesses, dans lequel l'huile de boîte de vitesses échange de la chaleur avec un liquide, l'échangeur de chaleur à plaques étant constitué de plaques (3) d'échangeur de chaleur empilées les unes dans les autres et formant des canaux d'écoulement (1, 2) distincts, les plaques présentant toutes des ouvertures (4) qui forment des canaux (5, 6, 7, 8) dans la pile de plaques (3) d'échangeur de chaleur, ces canaux servant à amener et évacuer les fluides, l'échangeur de chaleur présentant au moins une plaque supérieure (20) et au moins une plaque inférieure (10) ainsi qu'un canal de transfert (21) formé sur la plaque supérieure (20) ou sur la plaque inférieure (10) pour guider un fluide vers une position souhaitée d'amenée ou d'évacuation,
le canal de transfert (21) étant prévu sur l'une des plaques (10 ou 20) pour l'un des fluides, et un canal de guidage (11) qui sert à guider l'autre fluide étant formé sur la plaque ou sur l'autre plaque (10 ou 20), **caractérisé en ce que** une soupape de régulation thermostatique (25) est dispose dans un boîtier (22) sur le canal de transfert (21) de l'une des plaques (10 ou 20), son thermostat (23) entrant en contact avec l'un des fluides, notamment de l'huile, par l'intermédiaire d'une découpe (50) ménagée dans le canal de transfert (21), dans lequel un élément (51) de déviation d'écoulement est disposé dans la découpe (50) pour guider l'huile dans une chambre (28), dans lequel le boîtier (22) de la soupape de régulation thermostatique (25) présente un raccord (26) pour un liquide froid et un autre raccord (27) pour un liquide chaud et **en ce que** selon la température de l'huile, une température du liquide qui contribue à maintenir la température de l'huile au niveau de son optimum peut être établie en fonction de la température de l'huile, dans lequel le boîtier (22) de la soupape de régulation thermostatique (25) présente une chambre (28) pour l'huile dans laquelle l'huile est en contact avec le thermostat (23), **en ce qu'**une dérivation (29) prévue pour le liquide est raccordée hydrauliquement à un canal d'amenée de l'échangeur de chaleur à plaques et dans laquelle les raccords (26, 27) prévus pour les écoulements de liquide qui présentent différentes températures y débouchent.

2. Echangeur de chaleur à plaques selon la revendication 1, **caractérisé en ce que** le canal de guidage (11) prévu sur l'autre plaque (10 ou 20) est destiné au liquide et le canal de transfert (21) prévu dans une des plaques (10 ou 20) étant prévu pour l'huile.

3. Echangeur de chaleur à plaques selon la revendication 1, **caractérisé en ce qu'**un deuxième canal de transfert (30) prévu pour le liquide est formé sur une des plaques (10 ou 20).

4. Echangeur de chaleur à plaques selon la revendication 1, **caractérisé en ce que** le les canaux d'écoulement (1) prévus pour l'un des fluides, notamment l'huile, dans l'échangeur de chaleur à plaques peuvent être traversés dans une direction sur sensiblement la totalité de la longueur de l'échangeur de chaleur à plaques, des canaux d'écoulement (2) séparés des premiers et prévus pour l'autre fluide, notamment un liquide de refroidissement, pouvant être traversés dans l'autre sens, l'autre fluide étant divisé dans son canal d'entrée (5) en deux écoulements partiels (T1, T2), un des écoulements partiels (T1) pénétrant par le canal d'entrée (5) dans ses canaux d'écoulement (2) et l'autre écoulement partiel (T2) s'écoulant par le canal de guidage (11) vers l'extrémité opposée de l'échangeur de chaleur à plaques pour y pénétrer dans les canaux d'écoulement (2) qui lui sont associés de telle sorte que les deux écoulements partiels (T1, T2) de l'autre fluide présentent dans l'échangeur de chaleur à plaques des directions d'écoulement concurrentes et que les écoulements partiels (T1, T2) possèdent des directions d'écoulement divergentes en cas d'inversion du sens d'écoulement.

5. Echangeur de chaleur à plaques selon les revendications 1 et 4, **caractérisé en ce que** les écoulements partiels (T1, T2) concurrents ou divergents aboutissent sensiblement au milieu de l'échangeur de chaleur à plaques ou s'écoulent dans des directions divergentes et possèdent à cet effet un canal commun d'entrée ou de sortie (6).

6. Echangeur de chaleur à plaques selon la revendication 3, **caractérisé en ce que** le canal de sortie (6) débouche dans le deuxième canal de guidage (30) qui conduit à une tubulure de sortie (40) disposée à distance du canal de sortie (6).
